(19) Europäisches Patentamt / European Patent Office / Office européen des brevets

(11) **EP 3 470 821 A1**

(12) **DEMANDE DE BREVET EUROPEEN**

(43) Date de publication:
**17.04.2019 Bulletin 2019/16**

(21) Numéro de dépôt: **18200027.3**

(22) Date de dépôt: **12.10.2018**

(51) Int Cl.:
*G01N 21/17* (2006.01)         *G01N 29/22* (2006.01)
*G01N 29/24* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.10.2017 FR 1759679**

(71) Demandeur: **Commissariat à l'Energie Atomique et aux Energies Alternatives**
**75015 Paris (FR)**

(72) Inventeur: **GIDON, Serge**
**38140 LA MURETTE (FR)**

(74) Mandataire: **Cabinet Camus Lebkiri**
**25 rue de Maubeuge**
**75009 Paris (FR)**

(54) **DISPOSITIF PHOTOACOUSTIQUE MULTI-PASSAGE DE DETECTION DE GAZ**

(57) Un aspect de l'invention concerne un dispositif (1) photoacoustique multi-passage de détection de gaz comportant :
- une première partie (10) ayant une fonction de cavité optique stable et ayant un diamètre D et présentant une concavité avec un rayon de courbure R, le diamètre D et le rayon de courbure R étant tels que :

$$0 \leq \left(1 - \frac{D}{R}\right)^2 \leq 1$$

- une deuxième partie (20) ayant une fonction de résonateur acoustique et présentant une première extrémité (21) ayant un premier diamètre D1 et une deuxième extrémité (22) ayant un deuxième diamètre D2 inférieur au premier diamètre D1, le diamètre de la deuxième partie diminuant entre ses première et deuxième extrémités ;
- une ouverture pour l'introduction d'un faisceau lumineux ;
- un moyen d'introduction d'un gaz à détecter ;
- un détecteur acoustique (30) couplé avec la deuxième extrémité (22) de la deuxième partie (20).

Fig. 1a

**Description**

**DOMAINE TECHNIQUE DE L'INVENTION**

Le domaine technique de l'invention est celui de la détection photoacoustique de gaz. Un aspect de la présente invention concerne un dispositif photoacoustique multi-passage de détection de gaz. On entend par dispositif « multi-passage » un dispositif ayant une cavité optique permettant une longueur de chemin optique strictement supérieure à la longueur physique de ladite cavité optique.

**ARRIERE-PLAN TECHNOLOGIQUE DE L'INVENTION**

L'effet photoacoustique permet de détecter des éléments capables d'absorber un rayonnement lumineux, c'est-à-dire typiquement des gaz. Dans un détecteur de gaz photoacoustique, une source lumineuse variable dans le temps, telle qu'un laser pulsé ou modulé en amplitude ou en longueur d'onde, interagit avec un gaz à détecter. L'énergie lumineuse absorbée par le gaz à détecter est restituée sous la forme d'un échauffement transitoire qui génère une onde de pression, elle-même mesurée par un détecteur acoustique.

Un paramètre important est la longueur d'interaction de la lumière avec le gaz à détecter : si le gaz absorbe trop peu la lumière, on ne peut pas être sûr qu'il est présent. Si au contraire le gaz absorbe trop la lumière, on ne peut pas définir sa concentration avec certitude car toute concentration supérieure à un certain seuil peut mener à une absorption totale.

Pour maximiser une interaction lumière-matière et ainsi permettre la détection de faibles concentrations de gaz, il est notamment connu de confiner la lumière et le gaz à détecter dans une cavité optique multi-passage, c'est-à-dire une cavité optique permettant plusieurs passages d'un même faisceau lumineux et donc une longueur de chemin optique strictement supérieure à la longueur physique de ladite cavité optique.

Il existe des dispositifs photoacoustiques multi-passages de détection de gaz, mais ce sont des installations de laboratoire complexes : l'article « High finesse optical cavity coupled with a quartz-enhanced photoacoustic spectroscopic sensor », Patimisco et al., Analyst, 2015, 40, pp. 736-743 décrit ainsi l'utilisation d'une cavité optique résonnante de haute finesse, dans laquelle on contrôle précisément la longueur de la cavité pour avoir des interférences lumineuses constructives : la longueur d'une telle cavité est exactement un multiple de la demi-longueur d'onde de la source lumineuse. Les contraintes d'alignement et/ou de dimensionnement sont importantes dans de tels dispositifs multi-passages, ce qui empêche leur miniaturisation.

Il existe par ailleurs des dispositifs photoacoustiques mono-passages de détection de gaz, dans lesquels le faisceau lumineux passe une seule fois dans la cavité optique contenant le gaz à détecter. Par rapport au dimensionnement des dispositifs multi-passages précédemment évoqués, le dimensionnement de tels dispositifs mono-passages est avantageusement facilité. Toutefois, de tels dispositifs photoacoustiques mono-passages ont une faible longueur d'interaction de la lumière avec le gaz à détecter, ce qui rend la détection de petites concentrations de gaz difficile voire impossible.

On recherche donc un dispositif photoacoustique de détection de gaz permettant la détection de faibles concentrations de gaz tout en ayant des contraintes d'alignement et/ou de dimensionnement suffisamment relâchées pour permettre sa miniaturisation. Dans le cadre de la présente invention, on entend par « faible concentration » une concentration typiquement inférieure à 1 ppm (« partie par million »), donc de l'ordre de quelques ppb (de l'anglais « part per billion », c'est-à-dire « partie par milliard »), et on entend par « dispositif miniature » un dispositif occupant un volume de l'ordre de quelques $cm^3$.

**RESUME DE L'INVENTION**

Un premier aspect de l'invention concerne un dispositif photoacoustique multi-passage de détection de gaz comportant :

-    une première partie ayant une fonction de cavité optique stable, la première partie présentant une première extrémité fermée, une deuxième extrémité ouverte et une paroi latérale s'étendant entre les première et deuxième extrémités, la première partie ayant un diamètre D et présentant une concavité avec un rayon de courbure R, le diamètre D et le rayon de courbure R étant tels que :

$$0 \leq \left(1 - \frac{D}{R}\right)^2 \leq 1$$

-    une deuxième partie ayant une fonction de résonateur acoustique, la deuxième partie présentant une première extrémité ouverte agencée dans le prolongement de la deuxième extrémité ouverte de la première partie et une deuxième extrémité ouverte, la première extrémité ayant un premier diamètre D1 et la deuxième extrémité ayant un deuxième diamètre D2 inférieur au premier diamètre D1, le diamètre de la deuxième partie diminuant entre ses première et deuxième extrémités ;
-    une ouverture pour l'introduction d'un faisceau lumineux ;
-    un moyen d'introduction du gaz à détecter ;
-    un détecteur acoustique couplé avec la deuxième extrémité de la deuxième partie.

Dans la présente demande, les termes « cavité optique » et « résonateur optique » sont indifféremment employés et les termes « détecteur acoustique » et « microphone » sont indifféremment employés.

Grâce à un aspect de l'invention, on utilise un dispositif photoacoustique assurant une double fonction de cavité optique stable et de résonateur acoustique. Un faisceau lumineux est introduit dans le dispositif photoacoustique et se trouve confiné dans la première partie ayant la fonction de cavité optique stable. Le faisceau lumineux demeure confiné dans la première partie et son énergie se dissipe progressivement, principalement par absorption dans un gaz à détecter. Dans une moindre mesure, l'énergie du faisceau lumineux se dissipe aussi par des pertes lors des réflexions au sein de la première partie. Le dispositif est multi-passage grâce à la fonction de cavité optique stable de la première partie, mais on ne recherche pas la formation d'interférences constructives pour le faisceau lumineux donc les contraintes de dimensionnement du dispositif sont très relâchées. La deuxième partie ayant la fonction de résonateur acoustique permet, grâce à sa forme, d'amplifier une onde de pression générée par effet photoacoustique. La forme de la deuxième partie ayant la fonction de résonateur acoustique permet de concentrer le son à sa deuxième extrémité. Le détecteur acoustique est couplé à la deuxième extrémité de la deuxième partie afin de détecter l'onde de pression à l'endroit où elle est le plus amplifiée. Le dispositif photoacoustique selon un aspect de l'invention présente avantageusement de faibles contraintes d'alignement dans la mesure où il suffit d'introduire le faisceau lumineux dans le dispositif.

Outre les caractéristiques qui viennent d'être évoquées dans le paragraphe précédent, le dispositif photoacoustique multi-passage de détection de gaz selon un premier aspect de l'invention peut présenter une ou plusieurs caractéristiques complémentaires parmi les suivantes, considérées individuellement ou selon toutes les combinaisons techniquement possibles :

- La deuxième partie a une longueur L entre ses première et deuxième extrémités et le premier diamètre D1 de la première extrémité est inférieur à la longueur L.

- La deuxième partie a un diamètre qui diminue continûment entre le premier diamètre D1 de sa première extrémité et le deuxième diamètre D2 de sa deuxième extrémité.

- La première extrémité de la première partie est une optique réfléchissante de manière que la première partie a une fonction de cavité optique stable repliée.

- La première partie et la deuxième partie sont de section circulaire.

- La deuxième partie est de forme tronconique.

- Le moyen d'introduction d'un gaz à détecter est au moins un évent, chaque évent étant agencé dans la deuxième partie au droit d'un noeud de pression d'un mode acoustique du résonateur acoustique à privilégier.

- La première partie ayant une fonction de cavité optique stable présente un coefficient de réflexion strictement supérieur à 95%.

- L'ouverture pour l'introduction du faisceau lumineux est agencée dans la paroi latérale de la première partie ou dans la première extrémité de la première partie ou à la jonction entre la paroi latérale et la première extrémité de la première partie ou à la jonction entre la deuxième extrémité de la première partie et la première extrémité de la deuxième partie.

- Le dispositif photoacoustique multi-passage comporte un deuxième détecteur acoustique agencé au droit du noeud de pression du mode acoustique fondamental du résonateur acoustique.

Un deuxième aspect de l'invention concerne un procédé de détection de gaz au moyen d'un dispositif photoacoustique multi-passage selon l'une quelconque des revendications précédentes, comportant les étapes suivantes :

- introduire le faisceau lumineux dans le dispositif par l'ouverture ;
- introduire le gaz à détecter dans le dispositif par le moyen d'introduction ;
- réaliser une mesure au moyen du détecteur acoustique.

Outre les caractéristiques qui viennent d'être évoquées dans le paragraphe précédent, le procédé de détection de gaz au moyen du dispositif photoacoustique selon le premier aspect de l'invention peut présenter une ou plusieurs caractéristiques complémentaires parmi les suivantes, considérées individuellement ou selon toutes les combinaisons techniquement possibles :

- le faisceau lumineux est introduit dans le dispositif par l'ouverture avec un premier angle $\alpha1$ mesuré, dans une section droite de la première partie passant par l'ouverture, par rapport à un diamètre de la première partie passant par l'ouverture et/ou avec un deuxième angle $\alpha2$ mesuré, dans un plan perpendiculaire à ladite section droite et passant par l'ouverture, par rapport au diamètre de la première partie passant par l'ouverture, les premier et deuxième angles $\alpha1$, $\alpha2$ étant tels que :

$$\frac{d40}{D} \leq \alpha1, \alpha2 \leq 10 \times \frac{d40}{D}$$

avec d40 le diamètre de l'ouverture.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1a montre une représentation schématique d'un dispositif photoacoustique multi-passage de détection de gaz selon un premier mode de réalisation de l'invention.
- La figure 1b montre une deuxième représentation schématique d'un dispositif photoacoustique multi-passage de détection de gaz selon le premier mode de réalisation de l'invention.
- La figure 1c montre une troisième représentation schématique d'un dispositif photoacoustique multi-passage de détection de gaz selon le premier mode de réalisation de l'invention.
- La figure 2a montre une représentation schématique d'un dispositif photoacoustique multi-passage de détection de gaz selon un deuxième mode de réalisation de l'invention.
- La figure 2b montre une deuxième représentation schématique d'un dispositif photoacoustique multi-passage de détection de gaz selon le deuxième mode de réalisation de l'invention.
- La figure 3a est une représentation schématique en coupe d'une première partie, ayant une première géométrie, d'un dispositif photoacoustique multi-passage de détection de gaz selon l'un quelconque des modes de réalisation de l'invention.
- La figure 3b est une représentation schématique en coupe d'une première partie, ayant une deuxième géométrie, d'un dispositif photoacoustique multi-passage de détection de gaz selon l'un quelconque des modes de réalisation de l'invention.
- La figure 3c est une représentation schématique en coupe d'une première partie, ayant une troisième géométrie, d'un dispositif photoacoustique multi-passage de détection de gaz selon l'un quelconque des modes de réalisation de l'invention.
- La figure 4a montre schématiquement un premier agencement d'une ouverture pour l'introduction d'un faisceau lumineux, dans un dispositif photoacoustique multi-passage de détection de gaz selon l'un quelconque des modes de réalisation de l'invention.
- La figure 4b montre schématiquement un deuxième agencement d'une ouverture pour l'introduction d'un faisceau lumineux, dans un dispositif acoustique multi-passage de détection de gaz selon l'un quelconque des modes de réalisation de l'invention.
- La figure 4c montre schématiquement un troisième agencement d'une ouverture pour l'introduction d'un faisceau lumineux, dans un dispositif acoustique multi-passage de détection de gaz selon l'un quelconque des modes de réalisation de l'invention.
- La figure 4d montre schématiquement un quatrième agencement d'une ouverture pour l'introduction d'un faisceau lumineux, dans un dispositif acoustique multi-passage de détection de gaz selon l'un quelconque des modes de réalisation de l'invention.
- La figure 4e montre schématiquement un cinquième agencement d'une ouverture pour l'introduction d'un faisceau lumineux, dans un dispositif acoustique multi-passage de détection de gaz selon l'un quelconque des modes de réalisation de l'invention.
- La figure 5 montre des modes de résonances acoustiques calculés dans un dispositif photoacoustique multi-passage de détection de gaz selon un mode de réalisation de l'invention.
- La figure 6a montre une simulation numérique du champ de pression du mode fondamental du dispositif photoacoustique ayant les modes de résonances acoustiques de la figure 5.
- La figure 6b montre une simulation numérique du champ de pression du deuxième harmonique du dispositif photoacoustique ayant les modes de résonance acoustiques de la figure 5.
- La figure 7a montre schématiquement un premier angle d'introduction du faisceau lumineux, préférentiellement utilisé dans les premier, deuxième et troisième agencements des figures 4a, 4b et 4c.
- La figure 7b montre schématiquement un deuxième angle d'introduction du faisceau lumineux, préférentiellement utilisé dans les premier, deuxième et troisième agencements des figures 4a, 4b et 4c.

**DESCRIPTION DETAILLEE D'AU MOINS UN MODE DE REALISATION DE L'INVENTION**

Sauf précision contraire, un même élément apparaissant sur des figures différentes présente une référence unique.

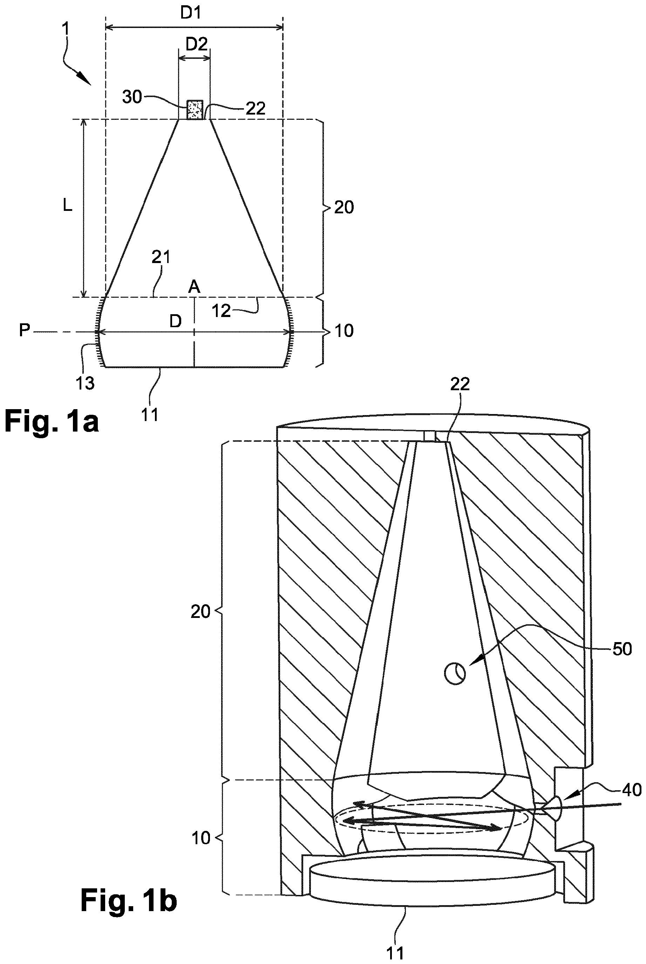

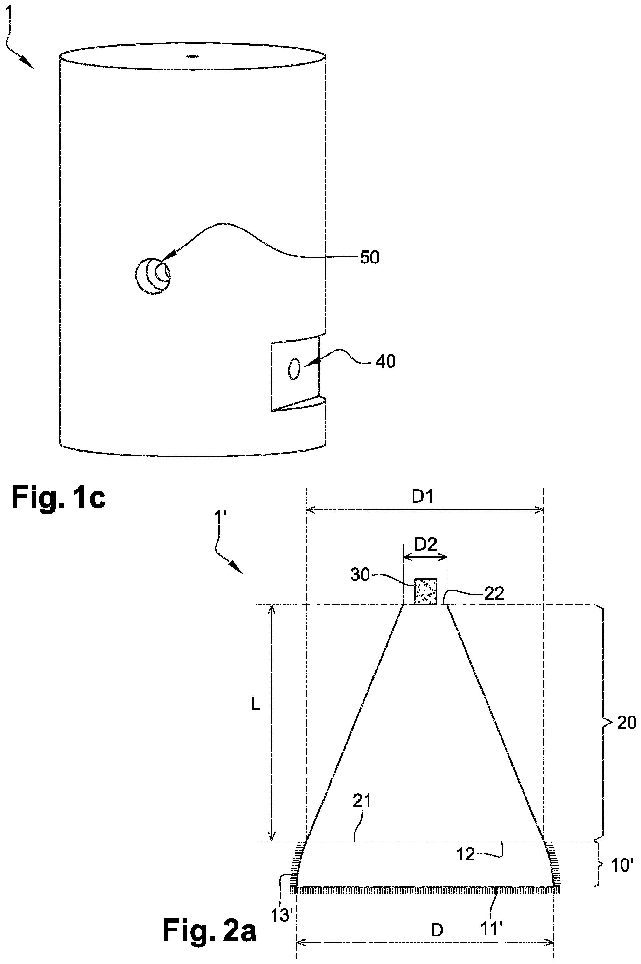

La figure 1a montre une représentation schématique d'un dispositif photoacoustique multi-passage 1 de détection de gaz, selon un premier mode de réalisation de l'invention. Pour plus de concision, le dispositif photoacoustique multi-passage 1 de détection de gaz selon le premier mode de réalisation de l'invention sera simplement désigné « dispositif 1 » dans la suite de la description. Les figures 1b et 1c montrent respectivement des deuxième et troisième représentations schématiques du dispositif 1 selon le premier mode de réalisation de l'invention. Les figures 1a, 1b et 1c sont décrites conjointement.

Le dispositif 1 selon le premier mode de réalisation comporte :

- une première partie 10 ayant une fonction de cavité optique stable,
- une deuxième partie 20 ayant une fonction de résonateur acoustique,

- une ouverture 40 pour l'introduction d'un faisceau lumineux,
- un détecteur acoustique 30 pour la détection d'une onde de pression générée par effet photoacoustique, et
- un moyen d'introduction d'un gaz à détecter.

La première partie 10 présente une première extrémité 11 fermée, une deuxième extrémité 12 ouverte et une paroi latérale 13 s'étendant entre les première et deuxième extrémités 11, 12. Afin d'assurer la fonction de cavité optique stable, la première partie 10 présente un diamètre D et une concavité avec un rayon de courbure R, le diamètre D et le rayon de courbure R étant tels que :

$$0 \leq \left(1 - \frac{D}{R}\right)^2 \leq 1$$

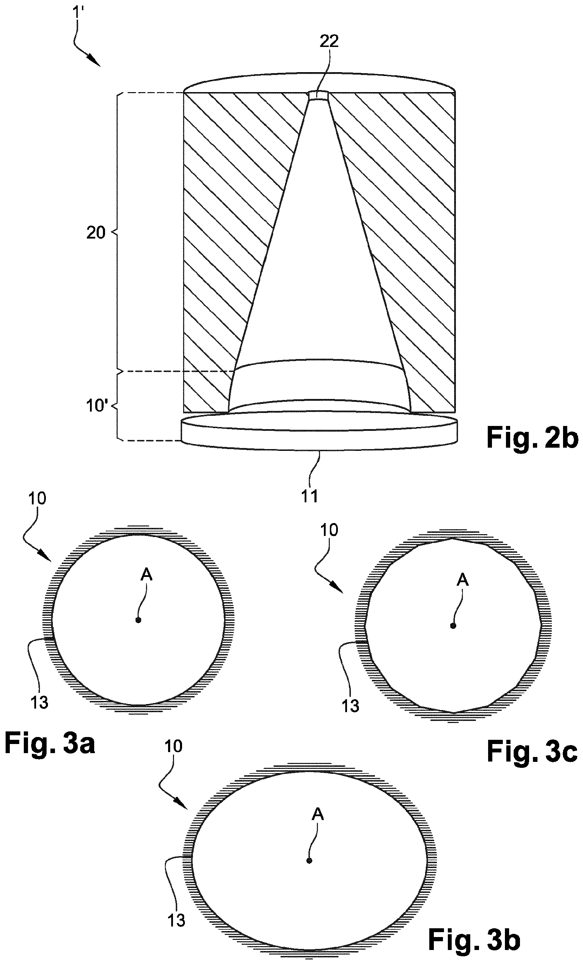

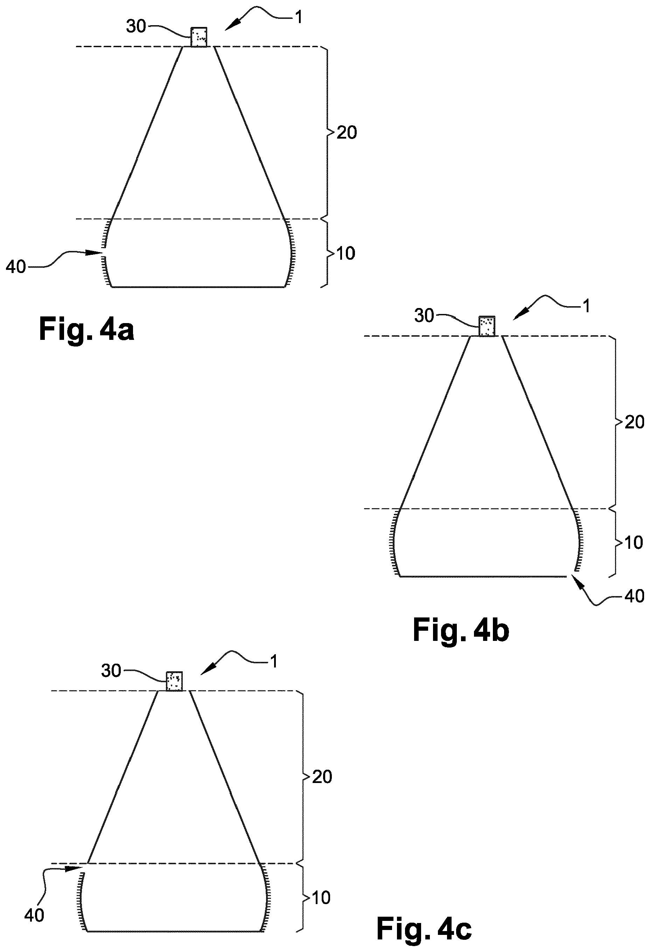

La cavité optique stable présente un axe de symétrie A et un plan de symétrie P. Le diamètre D de la première partie 10 est mesuré dans le plan de symétrie P, perpendiculairement à l'axe de symétrie A. La cavité optique stable présente préférentiellement un coefficient de réflexion le plus élevé possible, et d'au moins 95%, afin de contribuer à améliorer la sensibilité du dispositif 1.
Toute section de la première partie 10 par un plan perpendiculaire à son axe de symétrie A est préférentiellement circulaire, mais peut également être elliptique ou polygonale régulière. La figure 3a montre schématiquement une section de la première partie 10 par un plan perpendiculaire à son axe de symétrie A, dans la configuration préférée où toute section de la première partie 10 par un plan perpendiculaire à l'axe de symétrie A est circulaire. La figure 3b montre schématiquement une section de la première partie 10 par un plan perpendiculaire à son axe de symétrie A, dans une configuration alternative où toute section de la première partie 10 par un plan perpendiculaire à l'axe de symétrie A est elliptique. La figure 3c montre schématiquement une section de la première partie 10 par un plan perpendiculaire à son axe de symétrie A, dans une deuxième configuration alternative où toute section de la première partie 10 par un plan perpendiculaire à l'axe de symétrie A est polygonale régulière.
La deuxième partie 20 présente une première extrémité 21 ouverte, qui est agencée dans le prolongement et dans la continuité de la deuxième extrémité 12 de la première partie 10, et une deuxième extrémité 22 ouverte. La première extrémité 21 de la deuxième partie 20 a un premier diamètre D1, et la deuxième extrémité 22 de la deuxième partie 20 a un deuxième diamètre D2 qui est inférieur au premier diamètre D1. Le premier diamètre D1 est typiquement de l'ordre de quelques centimètres tandis que le deuxième diamètre D2, lié à la taille du détecteur acoustique 30, est typiquement de l'ordre d'une fraction de millimètre. La deuxième partie 20 a un diamètre qui diminue entre ses première et deuxième extrémités 21, 22. La deuxième partie 20 peut être définie par extrusion d'une forme sensiblement circulaire, dont le diamètre diminue entre le premier diamètre D1 et le deuxième diamètre D2, le long d'une ligne génératrice droite ou courbe, par exemple une ligne repliée en U ou enroulée en spirale. Le diamètre de la deuxième partie 20 est la dimension maximale dans chaque section perpendiculaire à la ligne génératrice. Le diamètre de la deuxième partie 20 diminue préférentiellement continûment entre ses première et deuxième extrémités 21, 22. Selon une alternative, le diamètre de la deuxième partie 20 peut diminuer par paliers entre ses première et deuxième extrémités 21, 22. Dans cette alternative, les paliers sont choisis en fonction de la longueur d'onde acoustique : plus la différence de diamètre entre deux paliers consécutifs est petite devant la longueur d'onde acoustique, moins on perturbe la propagation de l'onde acoustique. La différence de diamètre entre deux paliers consécutifs est préférentiellement choisie inférieure ou égale à 1/5 de la longueur d'onde acoustique, et encore plus préférentiellement choisie inférieure ou égale à 1/10 de la longueur d'onde acoustique.
La deuxième partie 20 est préférentiellement de forme tronconique. Alternativement, la deuxième partie 20 peut avoir une forme repliée, par exemple en U, ou une forme enroulée, par exemple en spirale.
Le détecteur acoustique 30, ou microphone, peut par exemple être un détecteur de type membrane mobile avec capteur capacitif ou jauge de contrainte piézoélectrique, ou un détecteur utilisant une technique de diapason dont on détecte la variation de fréquence de résonance, ou encore un détecteur utilisant une technique de détection de mouvement de surface (levier) par voie optique.
L'ouverture 40 pour l'introduction d'un faisceau lumineux peut être agencée de différentes manières dans la première partie 10 ou dans la deuxième partie 20. Différents agencements de l'ouverture 40 sont décrits ultérieurement, en lien avec les figures 4a à 4e.
De par leur dimensionnement précédemment décrit, les première et deuxième parties 10, 20 forment une enceinte qui résonne à certaines fréquences, également appelées « modes harmoniques ». Le mode harmonique ayant la fréquence la plus basse est appelé « premier harmonique » ou « mode fondamental ». C'est ce mode fondamental que l'on souhaite privilégier, au détriment des autres harmoniques de rang plus élevé. En effet, on bénéficie ainsi d'une fréquence d'excitation du gaz à détecter la plus basse possible, mieux adaptée au temps de relaxation nécessaire au gaz après chaque excitation. La première extrémité 11 de la première partie 10 étant fermée et la deuxième extrémité 22 de la deuxième partie 20 pouvant être considérée comme fermée par le détecteur acoustique 30, l'enceinte formée par les première et deuxième parties 10, 20 se comporte comme une enceinte fermée et le mode fondamental présente un ventre de champ stationnaire de pression à ses deux extrémités et un seul noeud de champ stationnaire de pression entre ses deux extrémités.

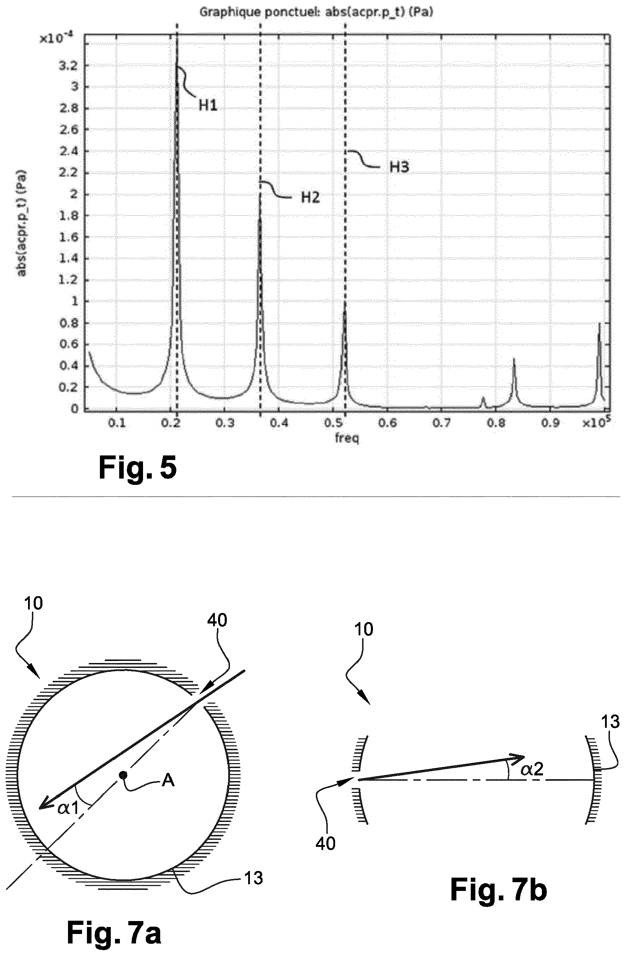

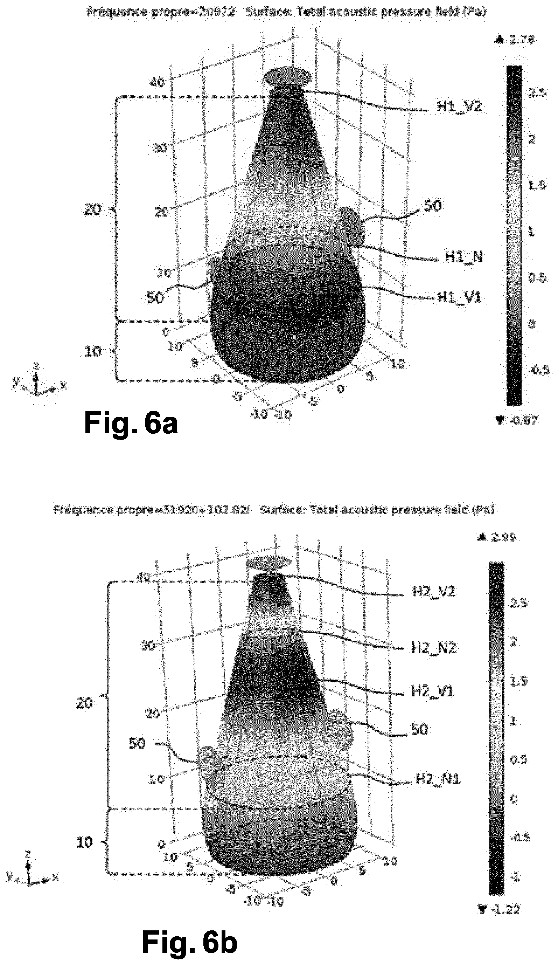

Le dispositif 1 comporte un moyen d'introduction d'un gaz à détecter dans l'enceinte formée par les première et deuxième parties 10, 20. Le moyen d'introduction peut être un unique évent 50 ou une pluralité d'évents 50, par exemple deux évents 50. Chaque évent 50 est agencé dans la deuxième partie 20, préférentiellement au droit du noeud de champ stationnaire de pression du mode fondamental, ce qui contribue à privilégier le mode fondamental en ne l'amortissant pas et en amortissant au contraire d'éventuels autres modes harmoniques. La figure 5 montre par exemple des modes de résonance acoustiques, notamment le mode fondamental H1, le deuxième harmonique H2 et le troisième harmonique H3, calculés dans une enceinte formée des première et deuxième parties 10, 20 ayant les caractéristiques suivantes : première partie 10 de 10 mm de hauteur ; deuxième partie 20 de forme tronconique et de 30 mm de hauteur. Pour cette même enceinte, avec les mêmes caractéristiques, la figure 6a montre une simulation numérique du champ de pression du mode fondamental H1, et la figure 6b montre une simulation numérique du champ de pression du deuxième harmonique H2. Le mode fondamental H1 de la figure 6a présente un premier ventre de pression H1_V1 à la première extrémité de la deuxième partie 20, un deuxième ventre de pression H1_V2 à la deuxième extrémité de la deuxième partie 20 et un noeud de pression H1_N entre les premier et deuxième ventres de pression H1_V1, H1_V2. Le deuxième harmonique H2 de la figure 6b présente un premier noeud de pression H2_N1, un deuxième noeud de pression H2_N2, un premier ventre de pression H2_V1 entre les premier et deuxième noeuds de pression H2_N1, H2_N2 et un deuxième ventre de pression H2_V2 à la deuxième extrémité de la deuxième partie 20. L'enceinte des figures 6a et 6b comporte des premier et deuxième évents 50 agencés au droit du noeud de pression H1_N du mode fondamental H1. Alternativement, le moyen d'introduction peut être une paroi poreuse, par exemple pour mieux sentir les émanations d'une surface au contact de la paroi poreuse. Dans ce cas, c'est préférentiellement la première extrémité 11 de la première partie 10 selon le premier mode de réalisation de l'invention qui est une paroi poreuse, afin que l'introduction du gaz par des pores de ladite paroi perturbe le moins possible le fonctionnement de la cavité acoustique. Dans le cadre de la présente invention, on entend par « paroi poreuse » une paroi munie de pores de dimension petite devant la longueur d'onde acoustique, c'est-à-dire de dimension inférieure à 1/10 de la longueur d'onde acoustique et préférentiellement inférieure à 1/100 de la longueur d'onde acoustique, chaque pore étant distant des autres pores d'une distance 3 à 30 fois supérieure à la dimension des pores. La longueur d'onde acoustique étant de l'ordre du cm, typiquement comprise entre 3 cm et 10 cm, les pores peuvent être de dimensions comprises entre 0,3 mm et 1 cm. En comparaison, chaque évent 50 est préférentiellement de taille millimétrique, notamment afin de protéger l'enceinte d'une éventuelle pollution sonore extérieure. On comprend donc que selon la définition donnée, un pore n'est pas nécessairement de plus petite dimension qu'un évent.

La figure 2a montre une représentation schématique d'un dispositif photoacoustique multi-passage de détection de gaz 1', selon un deuxième mode de réalisation de l'invention. Pour plus de concision, le dispositif photoacoustique multi-passage 1' de détection de gaz selon le deuxième mode de réalisation de l'invention sera simplement désigné « dispositif 1' » dans la suite de la description. La figure 2b montre une deuxième représentation schématique du dispositif 1' selon le deuxième mode de réalisation de l'invention. Les figures 2a et 2b sont décrites conjointement.

Le dispositif 1' selon le deuxième mode de réalisation de l'invention comporte :

- une première partie 10' ayant une fonction de cavité optique stable repliée,
- la deuxième partie 20 ayant la fonction de résonateur acoustique,
- l'ouverture 40 pour l'introduction d'un faisceau lumineux, et
- le détecteur acoustique 30 pour la détection d'une onde de pression générée par effet photoacoustique.

La deuxième partie 20, le détecteur acoustique 30 et l'ouverture 40 du dispositif 1' selon le deuxième mode de réalisation de l'invention ont été précédemment décrits pour le dispositif 1 selon le premier mode de réalisation de l'invention.

La première partie 10' ayant une fonction de cavité optique stable repliée présente une première extrémité 11' fermée, la deuxième extrémité 12 ouverte et une paroi latérale 13' s'étendant entre les première et deuxième extrémités 11', 12. Tout comme la cavité optique stable de la première partie 10 selon le premier mode de réalisation, la cavité optique stable repliée de la première partie 10' selon le deuxième mode de réalisation présente l'axe de symétrie A et le plan de symétrie P. Afin d'assurer la fonction de cavité optique stable repliée, la première extrémité 11' est une optique réfléchissante agencée dans le plan de symétrie P. Le dispositif 1' selon le deuxième mode de réalisation de l'invention, dont la première partie 10' réalise la fonction de cavité optique stable repliée, peut avantageusement être fabriqué par moulage sans difficulté de dépouille.

Différents agencements de l'ouverture 40 sont à présent décrits, en lien avec les figures 4a à 4e.

La figure 4a montre schématiquement un premier exemple selon lequel l'ouverture 40 est agencée dans la paroi latérale 13 de la première partie 10 selon le premier mode de réalisation. L'ouverture 40 peut de même être agencée dans la paroi latérale 13' de la première partie 10' selon le deuxième mode de réalisation.

La figure 4b montre schématiquement un deuxième exemple selon lequel l'ouverture 40 est agencée à la jonction entre la première extrémité 11 et la paroi latérale 13 de la première partie 10 selon le premier mode de réalisation. L'ouverture 40 peut de même être agencée à la jonction entre la première extrémité 11' et la paroi latérale 13' de la première partie 10' selon le deuxième mode de réalisation.

La figure 4c montre schématiquement un troisième exemple selon lequel l'ouverture 40 est agencée à la jonction entre la paroi latérale 13 et la deuxième extrémité 12 de la première partie 10 selon le premier mode de réalisation. L'ouverture 40 peut de même être agencée à la jonction entre la paroi latérale 13' et la deuxième extrémité 12' de la première partie 10' selon le deuxième mode de réalisation.

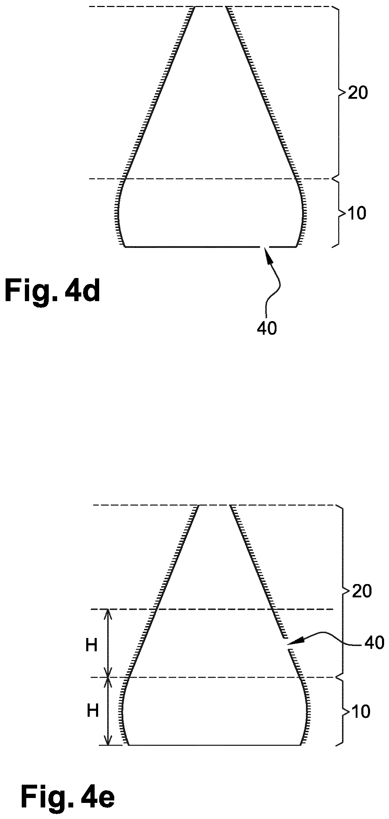

La figure 4d montre schématiquement un quatrième exemple selon lequel l'ouverture 40 est agencée dans la première extrémité 11 de la première partie 10 selon le premier mode de réalisation de l'invention. L'ouverture 40 peut de même être agencée dans la première extrémité 11' de la première partie 10' selon le deuxième mode de réalisation de l'invention.

La figure 4e montre schématiquement un cinquième exemple selon lequel l'ouverture 40 est agencée dans une zone de la deuxième partie 20 du dispositif 1 selon le premier mode de réalisation, ladite zone s'étendant sur une longueur H depuis la première extrémité 21 de la deuxième partie 20, la longueur H étant égale à la hauteur de cavité optique stable, c'est-à-dire à la hauteur de la première partie 10, mesurée suivant l'axe de symétrie A. L'ouverture 40 peut de même être agencée dans une zone de la deuxième partie 20 du dispositif 1' selon le deuxième mode de réalisation, ladite zone s'étendant sur la longueur H depuis la première extrémité 21 de la deuxième partie 20, la longueur H étant égale à la hauteur de la cavité optique stable repliée, c'est-à-dire au double de la hauteur de la première partie 10', mesurée suivant l'axe de symétrie A.

Afin d'éviter que le faisceau lumineux ne ressorte par l'ouverture 40 et afin de maximiser le chemin optique parcouru par le faisceau lumineux au sein de la cavité optique, notamment dans les premier, deuxième et troisième exemples des figures 4a, 4b et 4c, le faisceau lumineux est préférentiellement introduit par l'ouverture 40 avec un premier angle α1 ou avec un deuxième angle α2 ou à la fois avec les premier et deuxième angles α1 et α2. Le premier angle α1, représenté à la figure 7a, est mesuré, dans une section droite de la première partie 10 passant par l'ouverture 40, par rapport à un diamètre de la première partie 10 passant par l'ouverture 40. Le deuxième angle α2, représenté à la figure 7b, est mesuré, dans un plan perpendiculaire à la section droite précédemment définie et passant par l'ouverture 40, par rapport au diamètre de la première partie 10 passant par l'ouverture 40. Le premier angle α1 et le deuxième angle α2 sont préférentiellement petit, c'est-à-dire tels que :

$$\frac{d40}{D} \leq \alpha 1, \alpha 2 \leq 10 \times \frac{d40}{D}$$

Les figures 4a, 4b et 4c montrent que seule la première partie 10 présente une paroi réfléchissante et joue le rôle d'une cavité optique. Toutefois, dans les premier, deuxième et troisième exemples des figures 4a, 4b et 4c, la deuxième partie 20 pourrait alternativement également présenter une paroi réfléchissante, par exemple au moins sur une zone s'étendant sur la longueur H depuis la première extrémité 21 de la deuxième partie 20. Les figures 4d et 4e montrent que, en plus de la première partie 10, toute la deuxième partie 20 joue présente une paroi réfléchissante et joue le rôle d'une cavité optique. Toutefois, dans les quatrième et cinquième exemples des figures 4d et 4e, la deuxième partie 20 pourrait alternativement présenter une paroi réfléchissante occupant seulement une zone s'étendant sur la longueur H depuis la première extrémité 21 de la deuxième partie 20.

**Revendications**

**1.** Dispositif (1) photoacoustique multi-passage de détection de gaz comportant :

- une première partie (10) ayant une fonction de cavité optique stable, la première partie (10) présentant une première extrémité (11) fermée, une deuxième extrémité (12) ouverte et une paroi latérale (13) s'étendant entre les première et deuxième extrémités (11, 12), la première partie ayant un diamètre D et présentant une concavité avec un rayon de courbure R, le diamètre D et le rayon de courbure R étant tels que :

$$0 \leq \left(1 - \frac{D}{R}\right)^2 \leq 1$$

- une deuxième partie (20) ayant une fonction de résonateur acoustique, la deuxième partie (20) présentant une première extrémité (21) ouverte agencée dans le prolongement de la deuxième extrémité (12) ouverte de la première partie (10) et une deuxième extrémité (22) ouverte, la première extrémité (21) ayant un premier diamètre D1 et la deuxième extrémité (22) ayant un deuxième diamètre D2 inférieur au premier diamètre D1, le diamètre de la deuxième partie diminuant entre ses première et deuxième extrémités ;
- une ouverture (40) pour l'introduction d'un faisceau lumineux ;
- un moyen d'introduction d'un gaz à détecter ;
- un détecteur acoustique (30) couplé avec la deuxième extrémité (22) de la deuxième partie (20).

**2.** Dispositif (1) photoacoustique multi-passage selon la revendication 1, **caractérisé en ce que** la deuxième partie (20) a une longueur L entre ses première et deuxième extrémités (21, 22) et **en ce que** le premier diamètre D1 de la première extrémité (21) est inférieur à la longueur L.

**3.** Dispositif (1) photoacoustique multi-passage selon l'une quelconque des revendications précédentes, **caractérisé en ce que** la deuxième partie (20) a un diamètre qui diminue continûment entre le premier diamètre D1 de sa première extrémité (21) et le deuxième diamètre D2 de sa deuxième extrémité (22).

**4.** Dispositif (1) photoacoustique multi-passage selon l'une quelconque des revendications précédentes, **caractérisé en ce que** la première extrémité (11) de la première partie (10) est une optique réfléchissante de manière que la première partie (10) a une fonction de cavité optique stable repliée.

**5.** Dispositif (1) photoacoustique multi-passage selon l'une quelconque des revendications précédentes, **caractérisé en ce que** la première partie (10) et la deuxième partie (20) sont de section circulaire.

**6.** Dispositif (1) photoacoustique multi-passage selon l'une quelconque des revendications précédentes, **caractérisé en ce que** la deuxième partie (20) est de forme tronconique.

**7.** Dispositif (1) photoacoustique multi-passage selon l'une quelconque des revendications précédentes, **caractérisé en ce que** le moyen d'introduction d'un gaz à détecter est au moins un évent (50), chaque évent (50) étant agencé dans la deuxième partie (20) au droit d'un noeud de pression d'un mode acoustique du résonateur acoustique à privilégier.

**8.** Dispositif (1) photoacoustique multi-passage selon l'une quelconque des revendications précédentes, **caractérisé en ce que** la première partie ayant une fonction de cavité optique stable présente un coefficient de réflexion strictement supérieur à 95%.

**9.** Dispositif (1) photoacoustique multi-passage selon l'une quelconque des revendications précédentes, **caractérisé en ce que** l'ouverture (40) pour l'introduction du faisceau lumineux est agencée dans la paroi latérale (13) de la première partie (10) ou dans la première extrémité (11) de la première partie (10) ou à la jonction entre la paroi latérale (13) et la première extrémité (11) de la première partie (10) ou à la jonction entre la deuxième extrémité (12) de la première partie (10) et la première extrémité (21) de la deuxième partie (20).

**10.** Dispositif (1) photoacoustique multi-passage selon l'une quelconque des revendications précédentes, **caractérisé en ce qu'**il comporte un deuxième détecteur acoustique (32) agencé au droit du noeud de pression du mode acoustique fondamental du résonateur acoustique.

**11.** Procédé de détection de gaz au moyen d'un dispositif (1) photoacoustique multi-passage selon l'une quelconque des revendications précédentes, comportant les étapes suivantes :

- introduire le faisceau lumineux dans le dispositif (1) par l'ouverture (40) ;
- introduire le gaz à détecter dans le dispositif (1) par le moyen d'introduction ;
- réaliser une mesure au moyen du détecteur acoustique (30).

**12.** Procédé de détection de gaz selon la revendication précédente dans lequel le faisceau lumineux est introduit dans le dispositif (1) par l'ouverture (40) avec un premier angle $\alpha1$ mesuré, dans une section droite de la première partie (10) passant par l'ouverture (40), par rapport à un diamètre de la première partie (10) passant par l'ouverture (40) et/ou avec un deuxième angle $\alpha2$ mesuré, dans un plan perpendiculaire à ladite section droite et passant par l'ouverture (40), par rapport au diamètre de la première partie (10) passant par l'ouverture (40), les premier et deuxième angles $\alpha1$, $\alpha2$ étant tels que :

$$\frac{d40}{D} \leq \alpha1, \alpha2 \leq 10 \times \frac{d40}{D}$$

avec d40 le diamètre de l'ouverture (40).

**Fig. 1a**

**Fig. 1b**

**Fig. 1c**

**Fig. 2a**

**Fig. 2b**

**Fig. 3a**

**Fig. 3c**

**Fig. 3b**

Fig. 4a

Fig. 4b

Fig. 4c

**Fig. 4d**

**Fig. 4e**

Fig. 5

Fig. 7a

Fig. 7b

Fréquence propre=20972   Surface: Total acoustic pressure field (Pa)

▲ 2.78

H1_V2

50

H1_N

H1_V1

50

▼ -0.87

**Fig. 6a**

Fréquence propre=51920+102.82i   Surface: Total acoustic pressure field (Pa)

▲ 2.99

H2_V2

H2_N2

H2_V1

50

H2_N1

50

▼ -1.22

**Fig. 6b**

Europäisches
Patentamt

European
Patent Office

Office européen
des brevets

**RAPPORT DE RECHERCHE EUROPEENNE**

Numéro de la demande

EP 18 20 0027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MANNINEN A ET AL: "Versatile multipass cell for laser spectroscopic trace gas analysis", APPLIED PHYSICS B ; LASERS AND OPTICS, SPRINGER, BERLIN, DE, vol. 109, no. 3, 30 mars 2012 (2012-03-30) , pages 461-466, XP035147614, ISSN: 1432-0649, DOI: 10.1007/S00340-012-4964-2 * alinéa [0002]; figures 1,2 * ----- | 1-12 | INV. G01N21/17 G01N29/22 G01N29/24 |
| X | BÉLA TUZSON ET AL: "Compact multipass optical cell for laser spectroscopy", OPTICS LETTERS, OPTICAL SOCIETY OF AMERICA, vol. 38, no. 3, février 2013 (2013-02), pages 257-259, XP001579847, ISSN: 0146-9592, DOI: HTTP://DX.DOI.ORG/10.1364/OL.38.000257 * page 257, colonne 1, alinéa 2 - page 258, colonne 1, alinéa 1; figures 1,2,4 * ----- | 1-12 | |

DOMAINES TECHNIQUES
RECHERCHES (IPC)

G01N

Le présent rapport a été établi pour toutes les revendications

| Lieu de la recherche | Date d'achèvement de la recherche | Examinateur |
|---|---|---|
| Munich | 29 octobre 2018 | Consalvo, Daniela |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

&: membre de la même famille, document correspondant

EPO FORM 1503 03.82 (P04C02)

**RÉFÉRENCES CITÉES DANS LA DESCRIPTION**

**Littérature non-brevet citée dans la description**

- **PATIMISCO et al.** High finesse optical cavity coupled with a quartz-enhanced photoacoustic spectroscopic sensor. *Analyst,* 2015, vol. 40, 736-743